(19) Europäisches Patentamt / European Patent Office / Office européen des brevets

(11) **EP 3 293 481 B1**

(12) **EUROPEAN PATENT SPECIFICATION**

(45) Date of publication and mention
of the grant of the patent:
**02.06.2021 Bulletin 2021/22**

(21) Application number: **16897677.7**

(22) Date of filing: **27.07.2016**

(51) Int Cl.:
*G01B 11/25* (2006.01)   *G06T 7/521* (2017.01)

(86) International application number:
**PCT/CN2016/091913**

(87) International publication number:
**WO 2017/173744 (12.10.2017 Gazette 2017/41)**

(54) **MULTI-MEASUREMENT-MODE THREE-DIMENSIONAL MEASUREMENT SYSTEM AND MEASUREMENT METHOD**

SYSTEM ZUR DREIDIMENSIONALEN MESSUNG MIT MEHRFACHMESSMODUS UND MESSVERFAHREN

SYSTÈME DE MESURE TRIDIMENSIONNELLE À MULTIPLES MODES DE MESURE ET PROCÉDÉ DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2016 CN 201610220338**
**20.07.2016 CN 201610584281**

(43) Date of publication of application:
**14.03.2018 Bulletin 2018/11**

(73) Proprietor: **Shining 3D Tech Co., Ltd.**
**Wenyan, Xiaoshan**
**Hangzhou**
**Zhejiang (CN)**

(72) Inventors:
- **ZHAO, Xiaobo**
  **Hangzhou**
  **Zhejiang 311258 (CN)**
- **WANG, Wenbin**
  **Hangzhou**
  **Zhejiang 311258 (CN)**
- **YE, Zi**
  **Hangzhou**
  **Zhejiang 311258 (CN)**
- **YE, Chongmao**
  **Hangzhou**
  **Zhejiang 311258 (CN)**
- **ZHANG, Jian**
  **Hangzhou**
  **Zhejiang 311258 (CN)**
- **HUANG, Leijie**
  **Hangzhou**
  **Zhejiang 311258 (CN)**
- **XIANG, Xiaoping**
  **Hangzhou**
  **Zhejiang 311258 (CN)**

(74) Representative: **Grünecker Patent- und Rechtsanwälte**
**PartG mbB**
**Leopoldstraße 4**
**80802 München (DE)**

(56) References cited:
**FR-A1- 2 950 138      US-A1- 2014 015 963**
**US-A1- 2015 178 412**

- **Daoming Feng: "Research on the Multi-view Point 3-D Clouds Splicing Algorithm based on Local Registration", International Journal of Computer Science Issues (IJCSI), 1 January 2013 (2013-01-01), page 780, XP055472167, Mahebourg Retrieved from the Internet: URL:https://ijcsi.org/papers/IJCSI-10-1-1-780-786.pdf**
- **OLIVER AROLD ET AL: "Hand-guided 3D surface acquisition by combining simple light sectioning with real-time algorithms", ARXIV.ORG, CORNELL UNIVERSITY LIBRARY, 201 OLIN LIBRARY CORNELL UNIVERSITY ITHACA, NY 14853, 9 January 2014 (2014-01-09), XP080001088,**

**(Cont. next page)**

- **BRIAN CURLESS ET AL: "A volumetric method for building complex models from range images", COMPUTER GRAPHICS PROCEEDINGS. SIGGRAPH '96, ACM, NEW YORK, US, 1 August 1996 (1996-08-01), pages 303-312, XP058220108, DOI: 10.1145/237170.237269 ISBN: 978-0-89791-746-9**

- **HOPPE H ET AL: "SURFACE RECONSTRUCTION FROM UNORGANIZED POINTS", COMPUTER GRAPHICS, ACM, US, vol. 26, no. 2, 1 July 1992 (1992-07-01), pages 71-78, XP000972231, ISSN: 0097-8930, DOI: 10.1145/142920.134011**

**Description**

**BACKGROUND**

**Technical Field**

The present invention relates to the field of three-dimensional digital imaging and modeling, and more particularly to a three-dimensional measuring system and measuring method with multiple measuring modes.

**Related Art**

The non-contact three-dimensional measuring technology for a surface of an object has already been widely used in various fields such as industry, medical treatment, art, education, etc. The application in different fields has different requirements on three-dimensional measurement. For example, the automotive industry requires the data precision of the three-dimensional measurement to be high and the data detail to be clear; the human body three-dimensional measurement requires to rapidly acquire the three-dimensional data of the human body and requires a measuring system to have a handheld function, and the requirement on the precision is relatively low; and the three-dimensional measurement for a large-sized sculpture requires the measuring system to have a handheld function, requires the data precision to be relatively high, and requires the data to have more details.

The existing known three-dimensional scanner and a measuring method thereof cannot well integrate the functions meeting the aforementioned requirements in one three-dimensional measuring system. For example, the Chinese invention patent No. CN1483999A discloses a method and system for measuring a three-dimensional surface contour of an object, and the three-dimensional measuring system encoding light and phase shift is used to realize the high-precision three-dimensional measurement. However, the method and the system utilize multiple pictures to carry out the three-dimensional rebuilding, so the handheld function cannot be realized. In addition, both a three-dimensional scanning and automatic reference system and device disclosed in the invention patent No. CN101189487 B and a system for self-adaptively three-dimensionally scanning surface characteristics disclosed in the invention patent No. CN102112845 B have mentioned a handheld three-dimensional scanner. However, the foregoing device cannot realize the high-detail and high-precision three-dimensional measurement, and a projection pattern cannot be remotely updated. Furthermore, the foregoing measurement of multiple modes is independently carried out, the measured data cannot be processed, fused and optimized, which is only equivalent to that several measuring modes are just simply integrated into a device. In this case, the use of multiple measuring modes is not beneficial to the optimization of a measurement result. US 2014/0015963 A1 discloses a portable instrument for 3D surface metrology, which projects augmented-reality feedback directly on the measured target surface. The instrument generates structured-light measuring-patterns and projects them successively on a target surface. The instrument is lightweight and rugged. Accurate measurements with hand-held embodiments are made possible by high measurement speed and an optional built-in inertial measurement unit to correct for pose and motion effects.

**SUMMARY**

The present invention aims at solving the technical problem of providing a three-dimensional measuring system with multiple measuring modes, which not only may adopt a fixed measuring mode of multiple structural light patterns to realize the high-precision and high-detail three-dimensional measurement for a surface of an object, but also can adopt a handheld measuring mode of a single picture to realize the rapid and real-time handheld three-dimensional measurement for the surface of the object by switching the measuring modes. The invention is defined by the independent claims. Embodiments of the invention are set out in the dependent claims.

In order to achieve the above-mentioned objectives, the present invention adopts a technical solution as follows.

A three-dimensional measuring system with multiple measuring modes includes a control unit, a variable digital pattern generation unit, an image processing unit, a calculating unit and at least one image sensor, wherein

the control unit is respectively connected with the variable digital pattern generation unit, the image processing unit, the calculating unit and the image sensor, and is adapted for controlling the cooperative work of the whole measuring system;

the variable digital pattern generation unit includes a memory and a projector, the memory stores a plurality of light template digital patterns, the projector is a digital projector and is adapted for projecting the digital patterns in the memory onto a surface of a measured object;

the image sensor is adapted for acquiring the patterns which are projected by the projector onto the surface of the measured object;

the image processing unit is a multi-mode digital image processor having multiple image processing modes, and is adapted for extracting the patterns, acquired by the image sensor, of the surface of the measured object according to a selected image processing mode to obtain two-dimensional characteristics of the surface of the measured object; and the calculating unit is a multi-mode three-dimensional point cloud calculator having multiple three-dimensional point cloud calculating modes, and is adapted for searching corresponding points and three-dimensionally rebuilding the two-dimensional characteristics processed by the image processing unit according to a selected three-dimensional cloud calculating mode to obtain three-dimensional data of the surface of the measured object.

Preferably, the light template digital patterns stored in the memory include, but not limited to, sinusoidal fringes, digital speckle patterns and multi-parallel-line patterns.

Further, the three-dimensional measuring system with multiple measuring modes also includes a human-machine interaction unit, wherein the human-machine interaction unit is connected with the control unit, and is adapted for selecting the light template digital pattern, the image processing mode and the three-dimensional point cloud calculating mode and for displaying a measuring result.

Further, the three-dimensional measuring system also includes a communication unit, wherein the communication unit is connected with the control unit, and is adapted for being communicated with an external terminal.

Further, a communication content between the communication unit and the external terminal includes: outputting the three-dimensional data of the surface of the measured object obtained by the calculating unit, and inputting the updated or added light template digital patterns, an image processing algorithm and a three-dimensional point cloud calculating algorithm.

Further, the three-dimensional measuring system is a handheld measuring device.

Preferably, the handheld measuring device includes a main body, a projector disposed at the center of a front portion of the main body, image sensors symmetrically disposed at two sides of the projector, and a control unit, a memory, an image processing unit and a calculating unit, which are disposed in the main body, wherein the rear portion of the main body is provided with a handle or a handheld portion.

The memory on the variable digital pattern generation unit of the three-dimensional measuring system with multiple measuring modes of the present invention stores multiple light template digital patterns, the patterns are projected onto the surface of the measured object through the digital projector, and then the corresponding patterns are acquired by the image sensors, and are processed by the multi-mode digital image processor and the multi-mode three-dimensional point calculator to obtain the measured data at multiple measuring modes. By switching the measuring modes, not only can the fixed measuring mode of multiple structural light patterns be used to realize the high-precision and high-detail three-dimensional measurement for the surface of the object such as an industrial component, etc., but also the handheld measuring mode of a single picture can be used to realize the rapid and real-time handheld three-dimensional measurement for the surface of the object such as the human body, a sculpture, etc. Therefore, the high-precision and high-detail three-dimensional measurement or the handheld real-time measurement for the surfaces of different measured objects can be implemented according to the requirement of a user, and the application range is wide.

On the other hand, the three-dimensional measuring system of the present invention can input the updated or added light template digital patterns, the image processing algorithm and the three-dimensional point cloud calculating algorithm through the communication unit, thereby further meeting the requirements of the user at different periods of time, decreasing the upgrading cost of the device, and having good economic benefit.

The present invention also provides a three-dimensional measuring method with multiple measuring modes, the method being used for the data processing of the aforementioned three-dimensional measuring system with multiple measuring modes, thereby implementing the high-detail and high-precision three-dimensional measurement.

Specifically, the three-dimensional measuring method with multiple measuring modes includes the following steps:

S1, a uniform data structural model is established, the uniform data structural model being used for uniformly expressing measured data obtained at multiple measuring modes;

S2, at a single measuring mode, each piece of point cloud obtained by measurement is expressed by using a uniform data structure, and is calculated and preprocessed;

S3, the data obtained at different measuring modes is merged, and two pieces of point clouds at any positions are aligned to a uniform coordinate system; and

S4, the merged data is subject to hybrid global optimization to obtain a measuring result.

Further, in step S1, the multiple measuring modes include: a sinusoidal fringes measuring mode, a digital speckle pattern measuring mode and a multi-parallel-line pattern measuring mode.

Further, step S1 specifically includes:
the measured data obtained at multiple measuring modes is expressed by using a continuous implicit function D(x),

wherein $x \in R^3$ indicates a position in a three-dimensional space, D(x) indicates a shortest distance from x to the surface of a measured object, and a continuous curved surface indicates by D(x) = 0 is the surface of the object, obtained by measurement.

Further, in step S2, the calculating and the preprocessing specifically include:

S21, a cube G surrounding a measured area is used as an action scope of D(x), and the cube G is uniformly sectioned into small cubes $g_i$ of the same size;

S22, for each point $(P_j, N_j)$ in the point cloud obtained by measurement, the small cube $g_{P_j}$ where the $P_j$ is disposed is found, wherein $P_j$ is a three-dimensional coordinate of the point, and $N_j$ is a normal vector of the point;

S23, for each $g_{P_j}$ and $n^3$ $g_i$ taking $g_{P_j}$ as a center, a distance value $D(x_i)$ and a confidence weight $W(x_i)$ of the distance value are respectively calculated;

$$D(x_i) = N_j \cdot (x_i - P_j) \quad (1)$$

$$W(x_i) = \frac{d_g}{0.1 * d_g + \|x_i - P_j\|^2} \quad (2)$$

wherein $1 < n \leq 10$, $x_i$ indicates a central point of $g_{P_j}$ and $g_i$ anticipating in the calculating, $D(x_i)$ indicates a shortest distance from $x_i$ to the surface of the measured object, and is a positive value when being outside the object, and a negative value when being inside the object, $W(x_i)$ indicates a confidence level of $D(x_i)$, and $d_g$ is an edge length of $g_i$; and

S24, a marching cube method is used for obtaining point cloud and grid results.

Further, the calculating and the preprocessing also include:

S25, if a point in the multiple pieces of the point clouds obtained by measurement repeatedly falls in the same $g_i$, the distance value $D(x_i)$ and the confidence weight $W(x_i)$ of the distance value are successively calculated:

$$D^*(x_i) = \frac{W(x_i) * D(x_i) + w(x_i) * d(x_i)}{W(x_i) + w(x_i)} \quad (3)$$

$$W^*(x_i) = W(x_i) + w(x_i) \quad (4)$$

wherein $D(x_i)$ indicates a distance value before being updated, $W(x_i)$ is the confidence weight before being updated, $d(x_i)$ indicates a distance value obtained by latest calculation, $w(x_i)$ indicates the confidence weight obtained by latest calculation, $D^*(x_i)$ indicates the updated distance value, and $W^*(x_i)$ indicates the updated confidence weight; and thereafter, the marching cube method is used for obtaining the point clouds and the grid results.

Further, the calculating and the preprocessing also include:

S26, if the point in the multiple pieces of the point clouds obtained by measurement repeatedly falls in the same $g_i$, the distance value $D(x_i)$ and the confidence weight $W(x_i)$ of the distance value are successively calculated, and after the measurement is ended, for each $g_i$, a weighted average method is used to obtain a final $D_f(x_i)$ and $W_f(x_i)$:

$$D_f(x_i) = \frac{\sum W_j(x_i) * D_j(x_i)}{\sum W_j(x_i)} \quad (5)$$

$$W_f(x_i) = \sum W_j(x_i) \quad (6)$$

wherein $D_j(x_i)$ and $W_j(x_i)$ are values obtained by calculating when the point in the multiple pieces of point cloud repeatedly falling in the same $g_i$ at the $j^{th}$ time; and then, the marching cube method is used to obtain the point clouds and the grid results.

Further, when the measuring mode is the multi-parallel-line measuring mode, the measured data obtained in the measuring process is not calculated and updated in real time, and is only displayed in a sampling way so as to instruct the user to measure; and

after the measurement is ended, all point clouds obtained by measurement are arranged at a uniform global coordinate system, then the normal vectors of all the point clouds are calculated, and then the distance value $D(X_i)$ and the confidence weight $W(x_i)$ of the distance value are uniformly calculated.

Further, when the normal vector of all point clouds is calculated, the normal vector of each point is analyzed and calculated by using main components, and the following formula is specifically used:

$$C(p) = \frac{\sum q_i}{N} \quad (7)$$

$$M(p) = \sum (q_i - C(p)) \cdot (q_i - C(p))^T \quad (8)$$

wherein p is a point of the normal vector to be calculated, $q_i$ is a point of a specific neighborhood of p, $M(p)$ is a covariance matrix, and a characteristic vector corresponding to a minimum characteristic value is the normal vector of p; and the direction of the normal factor facing a camera is determined as the direction of the normal vector.

Further, in step S3, merging the data obtained at different measuring modes include rough merging and precise merging, wherein the rough merging method includes manual selection merging, mark point merging and characteristic merging, and the precise merging method includes an iterative closest point method.

Further, the step S4 specifically includes:

S41, corresponding points of the point cloud and a mark point are searched between two frames of the measured data;
S42, an error minimization formula is used to obtain a rigid variation matrix of each frame of point cloud;
S43, the rigid variation matrix is multiplied by each frame of point cloud, and such a process is iterated until convergence.

Further, in the step S42, the used error formula is as follows:

$$Error(RT) =$$

$$\sum_{\text{any two point clouds}(i,j)} \left( w_{i,j}^1 \sum_k \left\| n_k^T(RT_i * p_k - RT_j * q_k) \right\|^2 + w_{i,j}^2 \sum_k \left\| RT_i * P_k - \right. \right.$$

$$RT_j * Q_k 2 \quad (9)$$

wherein $(p_k, q_k)$ is a corresponding point of (i,j), $(P_k, Q_k)$ is a corresponding mark point of (i,j), $n_k$ is a normal vector of $q_k$, $RT_i$ is the rigid transformation matrix of the $i^{th}$ piece of point cloud, RT is the rigid transformation matrix of all point clouds, and $w_{i,j}^1$ and $w_{i,j}^2$ respectively are weights of the point cloud corresponding point and the mark point corresponding point.

Further, when there is one frame of multi-parallel-line measured data in i,j, set $w_{i,j}^1 = 0$.

The three-dimensional measuring method with multiple measuring modes uses the continuous implicit function $D(x)$ to perform the uniform data structural management and expression for the data measured at multiple measuring modes, thereby achieving an objective of switching different measuring modes. Meanwhile, the cube is used to surround the measuring area of the user, and the cube is uniformly sectioned to realize discrete expression of $D(x)$ to serve as foundation of the subsequent data processing. The three-dimensional measuring method with multiple measuring modes of the present invention realizes the real-time fusion of the measured data at multiple measuring modes, and realizes the high-detail and high-precision three-dimensional measurement.

In real application, the user can conveniently and rapidly complete the measurement task by combining the multiple measuring modes. For example, when a sculpture with a height equal to a person is measured, the digital speckle measuring mode can be used for the face portion to rapidly acquire data; the multi-parallel-line measuring mode can be used for characters, creased clothing, ornaments and the like to rapidly acquire high-precision data, and the sinusoidal fringe measuring mode can be used for an independent sculpture part of a small size (less than 15cm), such as a teapot, a tea cup and the like to obtain high-precision three-dimensional data.

## BRIEF DESCRIPTION OF THE DRAWINGS

Fig. 1 is a structural schematic diagram illustrating a specific embodiment of a three-dimensional measuring system with multiple measuring modes according to the present invention.

Fig. 2 is a structural schematic diagram illustrating partial units in the embodiment of Fig. 1.

Fig. 3 is a schematic diagram illustrating a sinusoidal fringe sequence pattern.

Fig. 4 is a schematic diagram illustrating a digital speckle pattern.

Fig. 5 is a schematic diagram illustrating a parallel-line pattern.

Fig. 6 is a schematic diagram illustrating discretization expression of a three-dimensional measuring method with multiple measuring modes according toD(x) the present invention.

Instruction of reference numbers in the drawings: 1-circuit board, 2-digital pattern projector, 3-image sensor, 4-digital pattern memory, 5-measurement triggering key, 6-handle, 7-data transmission interface.

## DETAILED DESCRIPTION

In order to further understand the present invention, preferred embodiments of the present invention are described below in conjunction with embodiments, but it should be understood that the descriptions are only to further explain the characteristics and advantages of the present invention, but not to limit claims of the present invention.

A three-dimensional measuring system with multiple measuring modes for acquiring three-dimensional data of a surface of an object includes a variable digital pattern generation unit, two or more than two image sensors, a controller, a multi-mode digital image processor, and a multi-mode three-dimensional point cloud calculator.

The controller is adapted for controlling the cooperative work of a digital projecting apparatus, the image sensors, the image processor and the three-dimensional point cloud calculator, receiving three-dimensional point cloud data and displaying, editing and storing the three-dimensional point cloud data.

The variable digital pattern generation unit includes a digital patter memory and a digital pattern projector. Various digital patterns are previously stored into the digital pattern memory, the digital pattern projector projects the patterns in the digital pattern memory onto the surface of the object to serve as characteristics for rebuilding object three-dimensional data. Various light template patterns capable of being projected include, but not limited to, sinusoidal fringes, digital speckle patterns, multi-parallel-line patterns and other projection patterns.

The image sensor acquires the patterns projected by the digital projecting apparatus onto the surface of the object.

The multi-mode digital image processor has multiple image processing modes, and extracts the patterns, acquired by the image sensors, of the surface of the object according to a selected image processing mode to obtain two-dimensional characteristics of the surface of the object.

The multi-mode three-dimensional point cloud calculator has multiple three-dimensional point cloud calculating modes, and performs corresponding point searching and three-dimensional reconstruction for the two-dimensional characteristics processed by the image processor according to a selected three-dimensional point cloud calculating mode, so as to obtain three-dimensional data of the object surface.

For convenience in real use, the measuring system of the present invention may also be provided with a human-machine interaction unit and a communication unit.

The human-machine interaction unit is a touch liquid crystal display screen, is connected with the controller, and is adapted for selecting one light template digital pattern, one image processing mode and one three-dimensional point cloud calculating mode and displaying a measuring result. The communication unit includes a wireless communication module and a communication interface, and is adapted for being communicated with an external terminal. The communication content includes: outputting three-dimensional data of the surface of the measured object, obtained by the multi-mode three-dimensional point cloud calculator, and inputting the updated or added light template digital pattern, the image processing algorithm and the three-dimensional point cloud calculating algorithm.

When the three-dimensional measuring system in the present embodiment works, a user selects one measuring mode, the controller transmits a command to the digital pattern memory according to the measuring mode to inform the digital pattern memory of a pattern needing to be projected, and starts the image sensors, so that the image sensors are in a state of waiting for a triggering command. The digital pattern memory transmits the pattern to the digital pattern projector. The digital pattern projector projects the patterns onto the surface of the object. Within 1ms after the image projection is completed, the digital pattern projector transmits a pulse signal to the image sensors. The image sensors acquire the patterns which are projected by the digital projecting apparatus onto the surface of the object, and transmit the acquired patterns to the multi-mode digital image processor. After receiving the patterns, the multi-mode digital image processor employs a corresponding characteristic extraction algorithm to obtain the two-dimensional characteristics of the surface of the object according to a measuring mode signal transmitted by the controller. The digital image processor transmits the two-dimensional characteristics to the multi-mode digital three-dimensional point cloud calculator. After receiving the two-dimensional characteristics, the three-dimensional point cloud calculator employs a corresponding algorithm to perform the corresponding point searching and the three-dimensional reconstruction according to the measuring mode signal transmitted by the controller, thereby obtaining three-dimensional data of the surface of the object. The three-dimensional point cloud calculator transmits the three-dimensional data of the surface of the object back to the controller, so as to perform displaying, editing and storing, or transmits the three-dimensional data to the external terminal through the communication unit to perform further processing.

When the system needs to update or add a three-dimensional measuring mode, the user can transmit a pattern needing to be updated or added to the digital pattern memory through the communication unit, and can respectively transmit the image processing algorithm and the three-dimensional point cloud calculating algorithm needing to be updated or added to the multi-mode digital image processor and the multi-mode three-dimensional point cloud calculator. After the updating is completed, the digital pattern memory, the image processor and the three-dimensional point cloud calculator return a completion signal, thereby completing the updating or addition of the three-dimensional measuring modes of the system.

The present invention is further described below in detail with reference to drawings and specific embodiments.

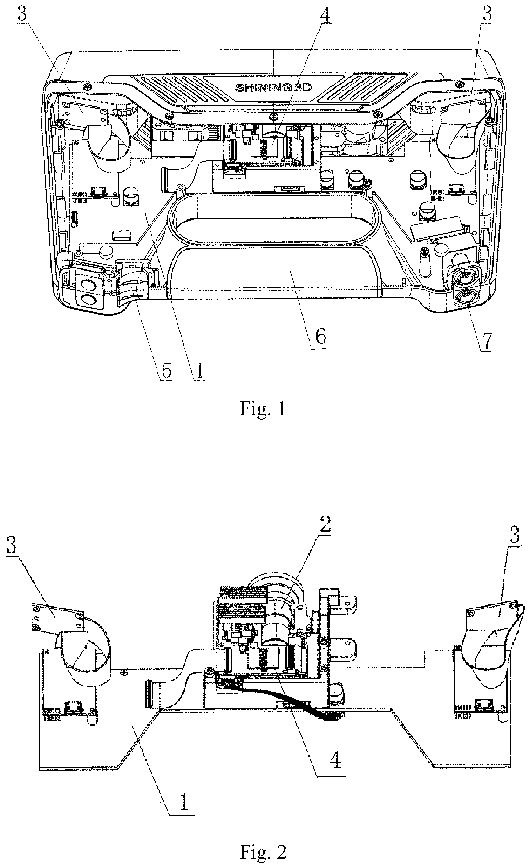

As shown in Fig. 1 and Fig. 2, in a specific embodiment of the present invention, a three-dimensional measuring device with multiple measuring modes includes a device main body, and a circuit board 1, a digital pattern projector 2, image sensors 3, a digital pattern memory 4, a measurement triggering key 5 and a data transmission interface 7 which are inside the device main body, wherein the circuit board 1 is provided with a controller, a multi-mode digital image processor and a multi-mode three-dimensional point cloud calculator. Furthermore, the device main body is provided with a handle 6 for handhold.

When the measuring device in the present embodiment works, after the controller receives a measurement instruction of the measurement triggering key 5, the controller transmits a pulse signal to a variable digital pattern generation unit so as to project a pattern at the current mode, within 1ms, the controller controls the two image sensors 3 through a triggering signal to synchronously acquire an image of the projected pattern, and the acquired image is processed by the multi-mode digital image processor and the three-dimensional point cloud calculator to generate three-dimensional point clouds.

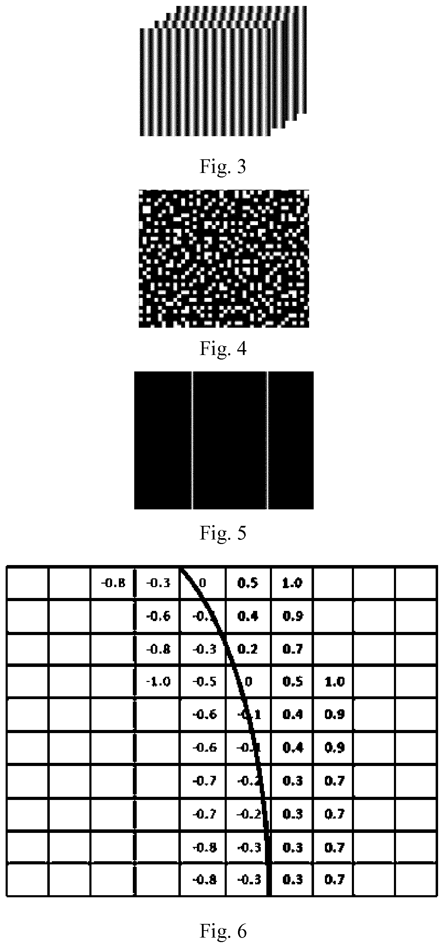

As shown in Fig. 3 to Fig. 5, the variable digital pattern generation unit in the present embodiment can project various light template patterns including, but not limited to, sinusoidal fringe sequences, digital speckles and parallel-line patterns.

By switching the measuring modes, the three-dimensional measuring device in the present embodiment not only can employ a fixed measuring mode of multiple structural light patterns to implement the high-precision and high-detail three-dimensional measurement for a surface of an object such as an industrial component, a tooth model and a small wooden sculpture, but also can employ a handheld measuring mode of a single picture to implement the rapid and real-time handheld three-dimensional measurement for the surface of the object, such as a human body and a statue.

In order to make the foregoing measuring system capable of implementing the real-time switching of multiple measuring modes, fusing the measured data and implementing the high-detail and high-precision three-dimensional measurement, the present invention also provides a three-dimensional measuring method with multiple measuring modes.

The method is described below in detail:

Firstly, the method employs a uniform data structure to perform data structure management and expression for the measured data.

Specifically, the uniform data structure is adapted for managing and expressing the measured data obtained at three measuring modes, i.e., the sinusoidal fringe measuring mode, the digital speckle measuring mode and the multi-parallel-line measuring mode, so as to achieve an objective of switching different measuring modes. In a measuring process, a continuous implicit function $D(x)$ is maintained, wherein $x \in R^3$ indicates a position in a three-dimensional space, and D(x) indicates a shortest distance from x to the surface of the object. When any measuring mode is used, after a new piece of data is measured, the piece of data is adapted for changing a value of D(x), so as to achieve an objective of fusing the data. After the measurement is ended, a continuous curved surface indicated by D(x) = 0 is the surface of the object, obtained by measurement.

As the computer cannot express the continuous data, the D(x) needs to be expressed in a discrete manner. In the present embodiment, a cube G is used to surround an area measured by a user, and the cube is used as an action scope of D(x). G is uniformly sectioned into small cubes $g_i$ of the same size (if an edge length of G is 512, and the edge size of $g_i$ is 1, $512^3$ small cubes can be obtained). A central point $x_i$ of each $g_i$ records two values $D(x_i)$ and $W(x_i)$. $D(x_i)$ indicates a shortest distance from $x_i$ to the surface of the object, and is a positive value when being outside the object and a negative value when being inside the object (as shown in Fig. 6). $W(x_i)$ is an accumulated weight and indicates a confidence level of $D(x_i)$. The greater the $W(x_i)$ is, the more credible the $D(x_i)$ is.

When in initialization, both $D(x_i)$ and $W(x_i)$ are 0. At one measuring mode, after a new piece of data is measured, each point $(P_j, N_j)$ in the data is respectively fused in G, wherein $P_j$ is a three-dimensional coordinate of the point, and $N_j$ is a normal vector of the point.

Firstly, the small cube $g_{P_j}$ where the $P_j$ is disposed is found. Preferably, in the present embodiment, only the value of $5^3$ $g_i$ surrounding the $g_{P_j}$ is changed, thus greatly saving a storage space and a calculating time.

For each $g_i$ needing to be changed, the signed distance value $D(x_i)$ and the confidence weight $W(x_i)$ of the distance value are calculated according to the following formula:

$$D(x_i) = N_j \cdot (x_i - P_j)$$

$$W(x_i) = \frac{d_g}{0.1 * d_g + ||x_i - P_j||^2}$$

wherein $d_g$ is an edge length of $g_j$. A curved surface nearby a point $P_j$ on the surface of the object may be approximately expressed by using a normal plane of the point, so the shortest distance from one point $x_i$ in a space nearby the $P_j$ to the surface of the object may be expressed approximately by using a distance from $x_i$ to the normal plane of the $P_j$. When the distance from $x_i$ to $P_j$ is further, an approximate value of $d(x_i)$ is less accurate, so $w(x_i)$ is inversely proportional to the distance from $x_i$ to $P_j$. In the present embodiment, $w(x_i) \in [10, 0.08]$.

After the measurement is ended, for each $g_i$, a weighted average method may be used to obtain the final $D_f(x_i)$ and $W_f(X_i)$:

$$D_f(x_i) = \frac{\sum W_j(x_i) * D_j(x_i)}{\sum W_j(x_i)}$$

$$W_f(x_i) = \sum W_j(x_i)$$

wherein $D_j(x_i)$ and $W_j(X_i)$ are values obtained by calculating when the point in multiple pieces of point clouds repeatedly falls in the same $g_i$ at the $j^{th}$ time.

In order to ensure the real-time updating of D(x), the aforementioned formula is changed to an accumulation manner:

$$D^*(x_i) = \frac{W(x_i) * D(x_i) + w(x_i) * d(x_i)}{W(x_i) + w(x_i)}$$

$$W^*(x_i) = W(x_i) + w(x_i)$$

wherein $D(x_i)$ indicates a distance value before being updated, $W(x_i)$ is the confidence weight before being updated, $d(x_i)$ indicates a latest calculated distance value, $w(x_i)$ indicates the latest calculated confidence weight, $D^*(x_i)$ indicates the updated distance value, and $W^*(x_i)$ indicates the updated confidence weight.

In the measurement process or after the measurement is ended, a marching cube method may be used for acquiring point cloud and grid results.

When the data is fused, the normal vector of each point in a single piece of data needs to be known. For the orderly point clouds obtained at the sinusoidal fringe measuring mode and the digital speckle measuring mode, the normal vector is easy to calculate. However, for the linearly distributed point clouds obtained at the multi-parallel-line measuring mode, the normal vector cannot be calculated by only using a single frame of point cloud data. Therefore, in the measuring method of the present invention, the measured data is not fused in the multi-parallel-line measuring process, and is only displayed in a sampling manner, so as to instruct the user to measure. When the measurement is ended, all point clouds obtained by measurement are arranged in a uniform global coordinate system, and then the normal vectors of all the point clouds are calculated and finally fused together. In the method of the present invention, the normal vector of each point is analyzed and calculated by using a main component. A specific formula is as follows:

$$C(p) = \frac{\sum q_i}{N}$$

$$M(p) = \sum (q_i - C(p)) \cdot (q_i - C(p))^T$$

wherein p is a point of the normal vector to be calculated, $q_i$ is a point in a specific neighborhood of p, M(p) is a covariance matrix, and a characteristic vector corresponding to a minimum characteristic value is the normal vector of p. Then the direction of the normal vector facing a camera is set as the direction of the normal vector. To search the point in the neighborhood is time-consuming, but the aforementioned uniformly-sectioned data structure is used in the present embodiment to accelerate the search of the point in the neighborhood.

Thereafter, different measured data is merged.

The merging of the point clouds refers to a process of aligning two pieces of point clouds at any positions to the uniform coordinate system. A complete merging process is generally divided into two steps: rough merging and precise merging. The rough merging refers to a process of roughly aligning the two pieces of point clouds at any positions. In this scenario, the available rough merging method includes a manual selection merging method, a mark point merging method and a characteristic merging method. The manual selection merging method refers to a process of completing the rough alignment through the artificial interaction, and is very stable but time-consuming and needs extra workload. For the real-time measuring scenario, the rough merging cannot be carried out through this way. The mark point merging refers to a method of pasting a mark onto the surface of the measured object so as to instruct the alignment of the point clouds. This method is very stable and high in speed, but is not available for the measured object on which the mark cannot be pasted (such as the human body, antique and the like). The precise merging refers to a process of precisely aligning two pieces of roughly-aligned point clouds. A universal precise merging method is an iterative closest point (ICP) method. A basic principle of the 1CP method is to iterate and optimize corresponding points in the two pieces of point clouds, so as to make a distance sum of the corresponding points minimum.

If the measured data is not merged, the measured data cannot be fused, and a measurer user cannot observe the measurement condition (for example, which part is not measured) at any time. The merging process is needed for a first frame after the measuring mode is switched. In other words, a merging main body is the point cloud and a piece of point cloud data extracted from D(x). The mark point merging method, the characteristic merging method and the manual selection merging method all are available if switch to the sinusoidal fringe measuring mode. If switch to the digital speckle measuring mode which is a real-time measuring mode, the manual selection merging method is not available. If switch to the multi-parallel-line measuring mode which is also a real-time measuring mode, the manual selection merging method is not available. As one frame of data is very small, the characteristic merging method is not available. Therefore, only the mark point merging can be used.

Finally, the hybrid global optimization for the measured data is carried out.

The foregoing merging is an optimization process of the current frame and the fused data. If the measured object is excessively large, or the number of frames is large, an accumulated error is extremely easy to generate. The accumulated error influences the overall precision. If a loop exists, large deformation or staggering may occur at a junction of the loop. Therefore, the global optimization process is needed.

At the multi-parallel-line measuring mode, the single-frame data size is very small, so the point cloud information cannot be used to perform the global optimization. The mark point global optimization can organize the data of three models, but also has various problems. (1) As the point cloud information is not used, the optimized local detail is poor; and (2) when the measurement without a mark point is carried out, the method is unavailable.

Based on the above, a hybrid global optimization method of the mark point and the cloud point is used. Firstly, corresponding points of the point cloud and the mark point are searched between every two frames. An error minimization formula is used to obtain rigid variation of each frame of the point cloud. The rigid variation is acted on each frame of point cloud, and this process is iterated until the convergence. The used error formula is as follows:

$$\text{Error}(RT) = \sum_{\text{any two point clouds}(i,j)} \left( w_{i,j}^1 \sum_k \left\| n_k^T(RT_i * p_k - RT_j * q_k) \right\|^2 \right.$$
$$\left. + w_{i,j}^2 \sum_k \left\| RT_i * P_k - RT_j * Q_k \right\|^2 \right)$$

wherein $(p_k, q_k)$ is a corresponding point of $(i,j)$, $(P_k, Q_k)$ is a corresponding mark point of $(i,j)$, $n_k$ is a normal vector of $q_k$, and $RT_i$ is a rigid transformation matrix of an $i^{th}$ piece of point cloud. RTRT is the rigid variation matrix of all point clouds.

$w_{i,j}^1$ and $w_{i,j}^2$ respectively are weights of the point cloud corresponding point and the mark point corresponding point.

When there is one frame of multi-parallel-line measured data in i, j, set $w_{i,j}^1 = 0$. When $w_{i,j}^1$ is equal to 0, this algorithm becomes a pure mark point global optimization method. When $w_{i,j}^2$ is equal to 0, this algorithm becomes a pure point cloud global optimization method.

The aforementioned descriptions of embodiments are only used to help to understand the method and the core concept of the present invention. It should be noted that for those skilled in the art, various improvements and modifications can be made to the present invention without departing from the scope of the claims.

**Claims**

1. A three-dimensional measuring system with multiple measuring modes includes a control unit (1), a variable digital pattern generation unit, an image processing unit, a calculating unit and at least one image sensor, wherein

   the control unit is respectively connected with the variable digital pattern generation unit, the image processing unit, the calculating unit and the image sensor, and is adapted for controlling the cooperative work of the whole measuring system;

   the variable digital pattern generation unit includes a memory and a projector, the memory stores a plurality of light template digital patterns, the projector is a digital projector (2) and is adapted for projecting the digital patterns in the memory (4) onto a surface of a measured object;

   the image sensor (3) is adapted for acquiring the patterns which are projected by the projector onto the surface of the measured object;

   the image processing unit is a multi-mode digital image processor (1) having multiple image processing modes, and is adapted for extracting the patterns, acquired by the image sensor, of the surface of the measured object according to a selected image processing mode to obtain two-dimensional characteristics of the surface of the measured object; and

   the calculating unit is a multi-mode three-dimensional point cloud calculator (1) having multiple three-dimensional point cloud calculating modes, and is adapted for searching corresponding points and three-dimensionally rebuilding the two-dimensional characteristics processed by the image processing unit according to a selected three-dimensional cloud calculating mode to obtain three-dimensional data of the surface of the measured object

   wherein the control unit (1) is adapted to:

establish a uniform data structural model, the uniform data structural model being used for uniformly expressing measured data obtained at multiple measuring modes;

at a single measuring mode, express, by using a uniform structure, each piece of point cloud obtained by measurement and calculate and preprocess;

merge data obtained at different measuring modes, and align two pieces of point clouds at any positions to a uniform coordinate system; and

subject the merged data to hybrid global optimization to obtain a measuring result.

2. The three-dimensional measuring system according to claim 1, wherein the light template digital patterns stored in the memory (4) include sinusoidal fringes, digital speckle patterns and multi-parallel-line patterns.

3. The three-dimensional measuring system according to claim 1, wherein the three-dimensional measuring system also includes a communication unit, wherein the communication unit is connected with the control unit, and is adapted for being communicated with an external terminal, wherein a communication content between the communication unit and the external terminal includes: outputting the three-dimensional data of the surface of the measured object obtained by the calculating unit, and inputting the updated or added light template digital patterns, an image processing algorithm and a three-dimensional point cloud calculating algorithm.

4. The three-dimensional measuring system according to any one of the claims 1-3, wherein the three-dimensional measuring system is a handheld measuring device, wherein the handheld measuring device includes a main body, the projector disposed at the center of a front portion of the main body, image sensors symmetrically disposed at two sides of the projector, and a control unit, the memory, the image processing unit and the calculating unit, which are disposed in the main body, wherein the rear portion of the main body is provided with a handle (6) or a handheld portion.

5. A three-dimensional measuring method with multiple measuring modes, **characterized by** comprising the following steps:

S1, a uniform data structural model is established, the uniform data structural model being used for uniformly expressing measured data obtained at multiple measuring modes;

S2, at a single measuring mode, each piece of point cloud obtained by measurement is expressed by using a uniform structure, and is calculated and preprocessed;

S3, data obtained at different measuring modes is merged, and two pieces of point clouds at any positions are aligned to a uniform coordinate system; and

S4, the merged data is subject to hybrid global optimization to obtain a measuring result.

6. The three-dimensional measuring method with multiple measuring modes according to claim 5, wherein in the step S1, the multiple measuring modes comprise a sinusoidal fringe measuring mode, a digital speckle measuring mode and a multi-parallel-line measuring mode.

7. The three-dimensional measuring method with multiple measuring modes according to claim 5, wherein the step S1 specifically comprises:

the measured data obtained at multiple measuring modes is expressed by using a continuous implicit function $D(x)$, wherein $x \in R^3$ indicates a position in a three-dimensional space, $D(x)$ indicates a shortest distance from x to the surface of the measured object, and a continuous curved surface expressed by $D(x) = 0$ is the surface of the object, obtained by measurement.

8. The three-dimensional measuring method with multiple measuring modes according to claim 7, wherein in the step S2, the calculating and the preprocessing specifically comprises:

S21, a cube G surrounding a measurement area is used as an action scope of $D(x)$, and uniformly sectioning the cube G into small cubes $g_i$ of the same size;

S22, for each point $(P_j, N_j)$ in the point cloud obtained by measurement, a small cube $g_{P_j}$ where $P_j$ is disposed is found, wherein $P_j$ is a three-dimensional coordinate of the point, and $N_j$ is a normal vector of the point;

S23, for each $g_{P_j}$ and $n^3$ $g_i$ taking $g_{P_j}$ as a center, a distance value $D(x_i)$ and a confidence weight $W(x_i)$ of the distance value are respectively calculated;

$$D(x_i) = N_j \cdot (x_i - P_j) \quad (1)$$

$$W(x_i) = \frac{d_g}{0.1 * d_g + ||x_i - P_j||^2} \quad (2)$$

wherein $1 < n \leq 10$, $x_i$ indicates a central point of $g_{Pj}$ and $g_i$ anticipating in the calculating, $D(x_i)$ indicates a shortest distance from $x_i$ to the surface of the measured object, and is a positive value when being outside the object, and a negative value when being inside the object, $W(x_i)$ indicates a confidence level of $D(x_i)$, and $d_g$ is an edge length of $g_i$; and
S24, using a marching cube method to obtain point clouds and grid results.

9. The three-dimensional measuring method with multiple measuring modes according to claim 8, further comprising:
S25, if a point in the multiple pieces of the point clouds obtained by measurement repeatedly falls in the same $g_i$, the distance value $D(x_i)$ and the confidence weight $W(x_i)$ of the distance value are successively calculated:

$$D^*(x_i) = \frac{W(x_i) * D(x_i) + w(x_i) * d(x_i)}{W(x_i) + w(x_i)} \quad (3)$$

$$W^*(x_i) = W(x_i) + w(x_i) \quad (4)$$

wherein $D(x_i)$ indicates a distance value before being updated, $W(x_i)$ is the confidence weight before being updated, $d(x_i)$ indicates a distance value obtained by latest calculation, $w(x_i)$ indicates the confidence weight obtained by latest calculation, $D^*(x_i)$ indicates the updated distance value, and $W^*(x_i)$ indicates the updated confidence weight; and
then using the marching cube method to obtain the point clouds and the grid results.

10. The three-dimensional measuring method with multiple measuring modes according to claim 8, further comprising:
S26, if the point in the multiple pieces of the measured point clouds repeatedly falls in the same $g_i$, the distance value $D(x_i)$ and the confidence weight $W(x_i)$ of the distance value are successively calculated,, and after the measurement is ended, a weighted average method is used to obtain a final $D_f(x_i)$ and $W_f(x_i)$ for each $g_i$:

$$D_f(x_i) = \frac{\sum W_j(x_i) * D_j(x_i)}{\sum W_j(x_i)} \quad (5)$$

$$W_f(x_i) = \sum W_j(x_i) \quad (6)$$

wherein $D_j(x_i)$ and $W_j(x_i)$ are values obtained by calculating when the point in the multiple pieces of point cloud repeatedly falling in the same $g_i$ at the $j^{th}$ time; and then, using the marching cube method to obtain the point clouds and the grid results.

11. The three-dimensional measuring method with multiple measuring modes according to claim 8, wherein when the measuring mode is the multi-parallel-line measuring mode, the measured data obtained in the measuring process is not calculated and updated in real time, and is only displayed in a sampling manner to instruct a user to measure; after the measurement is ended, all point clouds obtained by measurement are arranged at a uniform global coordinate system, then the normal vectors of all the point clouds are calculated, and then the distance value $D(x_i)$ and the confidence weight $W(x_i)$ of the distance value are uniformly calculated.

12. The three-dimensional measuring method with multiple measuring modes according to claim 11, wherein when the normal vectors of all the point clouds are calculated, the normal vector of each point is analyzed and calculated by using a main component, and the following formula is specifically used:

$$C(p) = \frac{\sum q_i}{N} \quad (7)$$

$$M(p) = \sum \left(q_i - C(p)\right) \cdot \left(q_i - C(p)\right)^T \qquad (8)$$

wherein p is a point of the normal vector to be calculated, $q_i$ is a point of a specific neighborhood of p, M(p) is a covariance matrix, and a characteristic vector corresponding to a minimum characteristic value is the normal vector of p; and the direction of the normal factor facing a camera is determined as the direction of the normal vector.

13. The three-dimensional measuring method with multiple measuring modes according to claim 5, wherein in the step S3, the merging of data obtained at different measuring modes comprises rough merging and precise merging, wherein the rough merging method comprises manual selection merging, mark point merging and characteristic merging, and the precise merging method includes an iterative closest point method.

14. The three-dimensional measuring method with multiple measuring modes according to any one of claims 5 to 13, wherein the step S4 specifically comprises:

S41, corresponding points of the point cloud and a mark point are searched between two frames of the measured data;
S42, an error minimization formula is used to obtain a rigid variation matrix of each frame of point cloud; and
S43, the rigid variation matrix is multiplied by each frame of point cloud, and such a process is iterated until convergence.

15. The three-dimensional measuring method with multiple measuring modes according to claim 14, wherein in the step S42, a used error formula is as follows:

$$\text{Error}(RT) =$$

$$\sum_{\text{any two point clouds}(i,j)} \left( w_{i,j}^1 \sum_k \left\| n_k^T(RT_i * p_k - RT_j * q_k) \right\|^2 + w_{i,j}^2 \sum_k \left\| RT_i * P_k - RT_j * Q_k \right\|^2 \right) (9)$$

wherein $(p_k, q_k)$ is a corresponding point of (i, j), $(P_k, Q_k)$ is a corresponding mark point of (i,j), $n_k$ is a normal vector of $q_k$, $RT_i$ is the rigid transformation matrix of the $i^{th}$ piece of point cloud, RT is a rigid transformation matrix of all point clouds, and $w_{i,j}^1$ and $w_{i,j}^2$ respectively are weights of the point cloud corresponding point and the mark point corresponding point,

wherein when there is one frame of multi-parallel-line measured data in i, j, set $w_{i,j}^1 = 0$.

## Patentansprüche

1. Dreidimensionales Messsystem mit mehreren Messmodi, umfassend eine Steuereinheit (1), eine variable digitale Mustererzeugungseinheit, eine Bildverarbeitungseinheit, eine Recheneinheit und mindestens einen Bildsensor, wobei

die Steuereinheit jeweils mit der variablen digitalen Mustererzeugungseinheit, der Bildverarbeitungseinheit, der Recheneinheit und dem Bildsensor verbunden ist und dazu ausgelegt wird, die kooperative Arbeit des gesamten Messsystems zu steuern;
die variable digitale Mustererzeugungseinheit einen Speicher und einen Projektor umfasst, und wobei der Speicher mehrere digitale Muster der Lichtschablone speichert, und wobei der Projektor ein digitaler Projektor (2) ist und dazu ausgelegt wird, die digitalen Muster in dem Speicher (4) auf eine Oberfläche eines gemessenen Objekts zu projizieren;
der Bildsensor (3) dazu ausgelegt wird, die vom Projektor auf die Oberfläche des gemessenen Objekts projizierten Muster zu erfassen;

die Bildverarbeitungseinheit ein digitaler Multimodi-Bildprozessor (1) mit mehreren Bildverarbeitungsmodi ist und dazu ausgelegt wird, die vom Bildsensor erfassten Muster der Oberfläche des gemessenen Objekts gemäß einem ausgewählten Bildverarbeitungsmodus zu extrahieren, um zweidimensionale Eigenschaften der Oberfläche des gemessenen Objekts zu erhalten; und

die Recheneinheit ein dreidimensionaler Multimodi-Punktwolkenrechner (1) mit mehreren dreidimensionalen Punktwolken-Berechnungsmodi ist und dazu ausgelegt wird, entsprechende Punkte zu suchen und die von der Bildverarbeitungseinheit verarbeiteten zweidimensionalen Eigenschaften gemäß einem ausgewählten dreidimensionalen Wolkenberechnungsmodus dreidimensional wiederherzustellen, um dreidimensionale Daten der Oberfläche des gemessenen Objekts zu erhalten;

wobei die Steuereinheit (1) dazu ausgelegt wird:

ein einheitliches Datenstrukturmodell zu erstellen, wobei das einheitliche Datenstrukturmodell zum einheitlichen Ausdrücken von bei mehreren Messmodi erhaltenen Messdaten verwendet wird;

in einem einzelnen Messmodus unter Verwendung einer einheitlichen Struktur jedes Punktwolkenstück, das durch Messen und Berechnen und Vorverarbeiten erhalten wird, auszudrücken;

Daten, die bei verschiedenen Messmodi erhalten werden, zusammenzuführen, und zwei Punktwolkenstücke an beliebigen Positionen auf ein einheitliches Koordinatensystem auszurichten; und

die zusammengeführten Daten einer hybriden globalen Optimierung zu unterziehen, um ein Messergebnis zu erhalten.

2. Dreidimensionales Messsystem nach Anspruch 1, wobei die in dem Speicher (4) gespeicherten digitalen Muster der Lichtschablone sinusförmige Streifen, digitale Speckle-Muster und Multi-Parallellinie-Muster umfassen.

3. Dreidimensionales Messsystem nach Anspruch 1, wobei das dreidimensionale Messsystem auch eine Kommunikationseinheit umfasst, wobei die Kommunikationseinheit mit der Steuereinheit verbunden ist und dazu ausgelegt wird, mit einem externen Terminal zu kommunizieren, und wobei ein Kommunikationsinhalt zwischen der Kommunikationseinheit und dem externen Terminal umfasst: Ausgeben der von der Recheneinheit erhaltenen dreidimensionalen Daten der Oberfläche des gemessenen Objekts und Eingeben der aktualisierten oder hinzugefügten digitalen Muster der Lichtschablone, eines Bildverarbeitungsalgorithmus und eines dreidimensionalen Berechnungsalgorithmus für dimensionale Punktwolken.

4. Dreidimensionales Messsystem nach einem der Ansprüche 1 bis 3, wobei das dreidimensionale Messsystem eine Handheld-Messvorrichtung ist, und wobei die Handheld-Messvorrichtung umfasst: einen Hauptkörper, wobei der Projektor in der Mitte eines vorderen Teils des Hauptkörpers angeordnet ist, Bildsensoren, die symmetrisch auf zwei Seiten des Projektors angeordnet sind, und eine Steuereinheit, der Speicher, die Bildverarbeitungseinheit und die Recheneinheit, die in dem Hauptkörper angeordnet sind, wobei der hintere Teil des Hauptkörpers mit einem Griff (6) oder einem Handheld-Teil versehen ist.

5. Dreidimensionales Messverfahren mit mehreren Messmodi, **dadurch gekennzeichnet, dass** es die folgenden Schritte umfasst:

S1: Erstellen eines einheitlichen Datenstrukturmodells, wobei das einheitliche Datenstrukturmodell zum einheitlichen Ausdrücken von bei mehreren Messmodi erhaltenen Messdaten verwendet wird;

S2: in einem einzelnen Messmodus wird jedes durch die Messung erhaltene Punktwolkenstück unter Verwendung einer einheitlichen Struktur ausgedrückt und berechnet und vorverarbeitet;

S3: Zusammenführen der Daten, die bei verschiedenen Messmodi erhalten werden, und Ausrichten von zwei Punktwolkenstücken an beliebigen Positionen auf ein einheitliches Koordinatensystem; und

S4: Unterziehen der zusammengeführten Daten einer hybriden globalen Optimierung, um ein Messergebnis zu erhalten.

6. Dreidimensionales Messverfahren mit mehreren Messmodi nach Anspruch 5, wobei im Schritt S1 die mehreren Messmodi einen sinusförmigen Streifenmessmodus, einen digitalen Speckle-Messmodus und einen Multi-Parallellinie-Messmodus umfassen.

7. Dreidimensionales Messverfahren mit mehreren Messmodi nach Anspruch 5, wobei der Schritt S1 spezifisch umfasst:

die bei mehreren Messmodi erhaltenen Messdaten werden unter Verwendung einer stetigen impliziten Funktion D(x)ausgedrückt, wobei $x \in R^3$ eine Position in einem dreidimensionalen Raum angibt, und wobei D(x)einen kürzesten Abstand von x zu der Oberfläche des gemessenen Objekts angibt, und wobei eine durchgehend gekrümmte Oberfläche, die durch D(x) = 0 ausgedrückt ist, die durch die Messung erhaltene Oberfläche des Objekts ist.

8. Dreidimensionales Messverfahren mit mehreren Messmodi nach Anspruch 7, wobei im Schritt S2 die Berechnung und die Vorverarbeitung spezifisch umfassen:

S21: ein Kubus G, der einen Messbereich umgibt, als Aktionsumfang von D(x) verwendet und der Kubus G wird gleichmäßig in kleine Kuben $g_i$ derselben Größe unterteilt;
S22: für jeden durch die Messung erhaltenen Punkt $(P_j, N_j)$ in der Punktwolke wird ein kleiner Kubus $g_{Pj}$ gefunden, in dem $P_j$ angeordnet ist, wobei $P_j$ eine dreidimensionale Koordinate des Punktes und $N_j$ ein normaler Vektor des Punktes ist;
S23: wird für jede $g_{Pj}$ und $n^3$ $g_i$ wird $g_{Pj}$ als Mittelpunkt genommen, wobei ein Abstandswert $D(x_i)$ und ein Konfidenzgewicht $W(x_i)$ des Abstandswerts werden jeweils berechnet;

$$D(x_i) = N_j \cdot (x_i - P_j)(1)$$

$$W(x_i) = \frac{d_g}{0.1*d_g+||x_i-P_j||^2}(2)$$

wobei $1 < n \leq 10$, $x_i$ gibt einen zentralen Punkt von $g_{Pj}$ und $g_i$ an, die bei der Berechnung erwartet sind, wobei $D(x_i)$ einen kürzesten Abstand von $x_i$ zu der Oberfläche des gemessenen Objekts angibt und ein positiver Wert ist, wenn er sich außerhalb des Objekts befindet, und ein negativer Wert ist, wenn er sich innerhalb des Objekts befindet, und wobei $W(x_i)$ ein Konfidenzniveau von $D(x_i)$ angibt und $d_g$ eine Kantenlänge von $g_i$ ist; und
S24: Verwenden einer marschierenden Kubusmethode, um Punktwolken und Gitterergebnisse zu erhalten.

9. Dreidimensionales Messverfahren mit mehreren Messmodi nach Anspruch 8, umfassend weiterhin:
S25: wenn ein Punkt in den mehreren Stücken der durch die Messung erhaltenen Punktwolken wiederholt in dasselbe $g_i$ fällt, werden der Abstandswert $D(x_i)$ und das Konfidenzgewicht $W(x_i)$ des Abstandswerts nacheinander berechnet:

$$D^*(x_i) = \frac{W(x_i)*D(x_i)+w(x_i)*d(x_i)}{W(x_i)+w(x_i)}(3)$$

$$W^*(x_i) = W(x_i) + w(x_i)(4)$$

wobei $D(x_i)$ einen Abstandswert vor der Aktualisierung angibt, $W(x_i)$ das Konfidenzgewicht vor der Aktualisierung ist, $d(x_i)$ einen durch die letzte Berechnung erhaltenen Abstandswert angibt, $w(x_i)$ das durch die letzte Berechnung erhaltene Konfidenzgewicht angibt, $D^*(x_i)$ den aktualisierten Abstandswert angibt und $W^*(x_i)$ das aktualisierte Konfidenzgewicht angibt; und
anschließendes Verwenden der marschierenden Kubusmethode, um die Punktwolken und die Gitterergebnisse zu erhalten.

10. Dreidimensionales Messverfahren mit mehreren Messmodi nach Anspruch 8, umfassend weiterhin:
S26: wenn der Punkt in den mehreren Stücken der gemessenen Punktwolken wiederholt in dasselbe $g_i$ fällt, werden der Abstandswert $D(x_i)$ und das Konfidenzgewicht $W(x_i)$ des Abstandswerts nacheinander berechnet, und nach Beenden der Messung wird ein gewichtetes Durchschnittsverfahren verwendet, um ein endgültiges $D_f(x_i)$ und $W_f(x_i)$ für jedes $g_i$ zu erhalten:

$$D_f(x_i) = \frac{\sum W_j(x_i)*D_j(x_i)}{\sum W_j(x_i)} \quad (5)$$

$$W_f(x_i) = \sum W_j(x_i) \quad (6)$$

wobei $D_j(x_i)$ und $W_j(x_i)$ Werte sind, die durch Berechnen erhalten werden, wenn der Punkt in den mehreren Punktwolkenstücken wiederholt in dasselbe$_g_i$ zum $j^{th}$ Zeitpunkt fällt; anschließendes Verwenden der marschierenden Kubusmethode, um die Punktwolken und die Gitterergebnisse zu erhalten.

11. Dreidimensionales Messverfahren mit mehreren Messmodi nach Anspruch 8, wobei, wenn der Messmodus der Multi-Parallellinie-Messmodus ist, die im Messprozess erhaltenen Messdaten nicht in Echtzeit berechnet und aktualisiert und nur auf Stichprobenweise angezeigt werden, um einen Benutzer zum Messen anzuweisen; und wobei nach Beenden der Messung alle durch die Messung erhaltenen Punktwolken in einem einheitlichen globalen Koordinatensystem angeordnet sind, und wobei dann die Normalvektoren aller Punktwolken berechnet werden und anschließend der Abstandswert $D(x_i)$ und das Konfidenzgewicht $W(x_i)$des Abstandswerts einheitlich berechnet werden.

12. Dreidimensionales Messverfahren mit mehreren Messmodi nach Anspruch 11, wobei beim Berechnen der Normalvektoren aller Punktwolken der Normalvektor jedes Punktes unter Verwendung einer Hauptkomponente analysiert und berechnet wird, und wobei die folgende Formel speziell verwendet wird:

$$C(p) = \frac{\sum q_i}{N} \quad (7)$$

$$M(p) = \sum (q_i - C(p)) \cdot (q_i - C(p))^T \quad (8)$$

wobei p ein Punkt des zu berechnenden Normalvektors ist, $q_i$ ein Punkt einer bestimmten Nachbarschaft von p ist, M(p) eine Kovarianzmatrix ist und ein charakteristischer Vektor, der einem minimalen charakteristischen Wert entspricht, der Normalvektor von p ist; und die Richtung des Normalfaktors, der einer Kamera zugewandt ist, als die Richtung des Normalvektors festgestellt ist.

13. Dreidimensionales Messverfahren mit mehreren Messmodi nach Anspruch 5, wobei im Schritt S3 das Zusammenführen von bei verschiedenen Messmodi erhaltenen Daten ein grobes Zusammenführen und ein präzises Zusammenführen umfasst, und wobei das grobe Zusammenführungsverfahren ein Zusammenführen manueller Auswahl, ein Zusammenführen der Markierungspunkte und ein charakteristisches Zusammenführen umfasst, und wobei das präzise Zusammenführen eine iterative Methode für den nächsten Punkt umfasst.

14. Dreidimensionales Messverfahren mit mehreren Messmodi nach einem der Ansprüche 5 bis 13, wobei der Schritt S4 spezifisch umfasst:

S41: entsprechende Punkte der Punktwolke und ein Markierungspunkt werden zwischen zwei Rahmen der gemessenen Daten gesucht;
S42: eine Fehlerminimierungsformel wird verwendet, um eine starre Variationsmatrix jedes Rahmens der Punktwolke zu erhalten; und
S43: die starre Variationsmatrix wird mit jedem Rahmen der Punktwolke multipliziert, und ein solcher Prozess wird bis zur Konvergenz iteriert.

15. Dreidimensionales Messverfahren mit mehreren Messmodi nach Anspruch 14, wobei im Schritt S42 eine verwendete Fehlerformel wie folgt lautet:

$$\text{Error}(RT) =$$

$$\sum_{\text{any two point clouds}(i,j)} \left( w_{i,j}^1 \sum_k \left\| n_k^T (RT_i * p_k - RT_j * q_k) \right\|^2 + w_{i,j}^2 \sum_k \left\| RT_i * P_k - RT_j * Q_k \right\|^2 \right) (9)$$

wobei $(p_k, q_k)$ ein entsprechender Punkt von (i, j) ist, $(P_k, Q_k)$ ein entsprechender Markierungspunkt von (i, j) ist, $n_k$ ein normaler Vektor von $q_k$ ist, $RT_i$ die starre Transformationsmatrix des $i^{th}$ Stücks der Punktwolke ist, RT eine starre Transformationsmatrix aller Punktwolken ist, und $w_{i,j}^1$ und $w_{i,j}^2$ jeweils Gewichte des der Punktwolke entsprechendes Punks und des dem Markierungspunkt entsprechenden Punkts sind,

und wobei $w_{i,j}^2$ gibt wird, wenn es einen Rahmen von Multi-Parallellinie-Messdaten mit mehreren parallelen in i, j.

**Revendications**

1. Système de mesure tridimensionnel avec modes de mesure multiples, qui comprend une unité de commande (1), une unité génératrice de motif numérique variable, une unité de traitement d'image, une unité de calcul et au moins un capteur d'image, et **caractérisé en ce que** :

   L'unité de commande, conçue pour la commande de coordination de tout le système de mesure, est respectivement connectée à l'unité génératrice de motif numérique variable, à celle de traitement d'image, à celle de calcul et au capteur d'image ;
   L'unité génératrice de motif numérique variable comprend une mémoire et un projecteur. Ladite mémoire mémorise un certain nombre de motifs numérique de modèles lumineux ; ledit projecteur numérique (2) est conçu pour projeter sur une surface d'un objet à mesurer les motifs numériques mémorisés dans ladite mémoire (4) ;
   Le capteur d'image (3) a pour fonction d'acquérir les motifs que ledit projecteur a projetés sur la surface de l'objet à mesurer ;
   L'unité de traitement d'image est un processeur d'image numérique multimode (1), qui fonctionne dans plusieurs modes de traitement d'image et pour extraire, selon le mode de traitement d'image sélectionné, les motifs sur la surface de l'objet à mesurer qui est acquis par le capteur d'image, de manière à obtenir des caractéristiques bidimensionnelles de la surface de l'objet à mesurer ; et
   L'unité de calcul est un calculateur de nuage de points tridimensionnel multimode (1), qui fonctionne dans plusieurs modes de calcul de points tridimensionnel et pour rechercher les points correspondants et reconstruire en trois dimensions les caractéristiques bidimensionnelles issues de l'unité de traitement d'image, selon le mode de calcul sélectionné, de manière à obtenir des données tridimensionnelles de la surface de l'objet à mesurer
   Dans lequel ladite unité de commande (1) est conçue pour :

      Établir un modèle structurel de données uniforme, qui est utilisé pour exprimer uniformément les données de mesure obtenues dans plusieurs modes de mesure ;
      Dans un seul mode de mesure, exprimer chaque nuage de points obtenu en utilisant ledit modèle structurel de données uniforme, et effectuer le calcul et le prétraitement ;
      Associer les données obtenues dans les différents modes de mesure, et intégrer deux nuages de points à n'importe quelle position dans un système de coordonnées uniforme ; et
      Effectuer une optimisation globale hybride sur les données associées pour obtenir un résultat de mesure.

2. Système de mesure tridimensionnel selon la revendication 1, **caractérisé en ce que** les motifs numériques de modèle lumineux mémorisés dans ladite mémoire (4) comprennent les franges sinusoïdales, les motifs de chatoiement numériques et les motifs multilignes parallèles.

3. Système de mesure tridimensionnel selon la revendication 1, **caractérisé en ce qu'**il comprend également une unité de communication ; ladite unité de communication est connectée à ladite unité de commande et conçue pour communiquer avec un terminal externe sur ce qui suit : la sortie des données tridimensionnelles de la surface de l'objet à mesurer, qui sont obtenues au moyen de ladite unité de calcul ; ainsi que l'entrée des motifs numérique de modèles lumineux mis à jour ou ajoutés, d'un algorithme de traitement d'image et d'un algorithme de calcul de nuage de points tridimensionnel.

4. Système de mesure tridimensionnel selon l'une quelconque des revendications 1 à 3, **caractérisé en ce qu'**il est un dispositif de mesure portatif qui comprend un corps principal, un projecteur disposé au centre de la partie avant dudit corps principale, des capteurs d'image disposés symétriquement sur deux côtés dudit projecteur, ainsi qu'une unité de commande, une mémoire, une unité de traitement d'image et une unité de calcul, qui sont disposées dans le corps principal ; d'ailleurs, la partie arrière du corps principal est pourvue d'une poignée (6) ou d'un composant portatif.

**5.** Méthode de mesure tridimensionnelle avec multimodes de mesure, **caractérisée en ce qu'**il comprend les étapes suivantes :

S1. Établir un modèle structurel de données uniforme, qui est utilisé pour exprimer uniformément les données de mesure obtenues dans plusieurs modes de mesure ;

S2. Dans un seul mode de mesure, exprimer chaque nuage de points obtenu en utilisant ledit modèle structurel de données uniforme, et effectuer le calcul et le prétraitement ;

S3. Associer les données obtenues dans les différents modes de mesure, et intégrer deux nuages de points à n'importe quelle position dans un système de coordonnées uniforme ; et

S4. Effectuer une optimisation globale hybride sur les données associées pour obtenir un résultat de mesure.

**6.** Méthode de mesure tridimensionnelle avec multimodes de mesure selon la revendication 5, **caractérisée en ce que** lesdits multiples modes de mesure dans l'étape S1 comprennent le mode de mesure de franges sinusoïdales, celui de mesure de motifs de chatoiement numériques et celui de mesure de motifs multilignes parallèles.

**7.** Méthode de mesure tridimensionnelle avec multimodes de mesure selon la revendication 5, **caractérisée en ce que** l'étape S1 comprend spécifiquement :

Les données mesurées dans les plusieurs modes de mesure sont exprimées en utilisant une fonction implicite continue D(x), où : $x \in R^3$ indique une position dans un espace tridimensionnel, D(x) indique la distance la plus courte entre x et la surface de l'objet à mesurer, et une surface courbe continue exprimée par D(x) = 0 est la surface de l'objet, obtenue par la mesure.

**8.** Méthode de mesure tridimensionnelle avec multimodes de mesure selon la revendication 7, **caractérisée en ce que** le calcul et le prétraitement dans l'étape S2 comprennent spécifiquement :

S21. Un cube G entourant une zone de mesure est pris pour champ d'action de ladite fonction D(x), est uniformément divisé en petits cubes $g_i$ de même taille ;

S22. Pour chaque point $(P_j, N_j)$ dans le cadre du nuage de points obtenu par mesure, on trouve le petit cube $g_{Pj}$ où ledit point $P_j$ est disposé, où $P_j$ est les coordonnées tridimensionnelles dudit point, et $N_j$ est un vecteur normal dudit point ;

S23. Pour chaque $g_{Pj}$ and $n^3$ $g_i$ dont le centre est $g_{Pj}$, la valeur de distance $D(x_i)$ et son poids de confiance $W(x_i)$ sont respectivement calculés comme suit :

$$D(x_i) = N_j \cdot (x_i - P_j)(1)$$

$$W(x_i) = \frac{d_g}{0.1*d_g + ||x_i - P_j||^2}(2)$$

Où : 1 $< n \leq 10$ ; $x_i$ indique un point central de $g_{Pj}$ et $g_i$ concerné dans le calcul ; $D(x_i)$ indique la distance la plus courte entre $x_i$ et la surface de l'objet à mesurer, qui est une valeur positive en étant à l'extérieur de l'objet, et une valeur négative en étant à l'intérieur de l'objet ; $W(x_i)$ indique un niveau de confiance de $D(x_i)$ ; et $d_g$ est une longueur d'arête de $g_i$ ; et

S24. En utilisant une méthode de cube en marche, obtenir les nuages de points et les résultats de grille.

**9.** Méthode de mesure tridimensionnelle avec multimodes de mesure selon la revendication 8, **caractérisée en ce qu'**il comprend en outre :

S25. Si les points dans plusieurs nuages de points obtenus par mesure se trouvent à plusieurs reprises dans le même $g_i$, ladite valeur de distance $D(x_i)$ et son poids de confiance $W(x_i)$ sont successivement calculés comme suit :

$$D^*(x_i) = \frac{W(x_i)*D(x_i) + w(x_i)*d(x_i)}{W(x_i) + w(x_i)}(3)$$

$$W^*(x_i) = W(x_i) + w(x_i)(4)$$

Où : $D(x_i)$ la valeur de distance avant la mise à jour ; $W(x_i)$ indique le poids de confiance avant la mise à jour ; $d(x_i)$ indique la valeur de distance obtenue par le dernier calcul ; $w(x_i)$ indique le poids de confiance obtenu par le dernier calcul ; $D^*(x_i)$ indique la valeur de distance mise à jour ; et $W^*(x_i)$ indique le poids de confiance mis à jour ; et

Puis, en utilisant une méthode de cube en marche, obtenir les nuages de points et les résultats de grille.

**10.** Méthode de mesure tridimensionnelle avec multimodes de mesure selon la revendication 8, **caractérisée en ce qu'**il comprend en outre :

S26. Si les points dans plusieurs nuages de points obtenus par mesure se trouvent à plusieurs reprises dans le même $g_i$, ladite valeur de distance $D(x_i)$ et son poids de confiance $W(x_i)$ sont successivement calculés comme suit ; et une fois la mesure terminée, pour chaque $g_i$, une méthode de moyenne pondérée est utilisée pour obtenir les résultats finaux $D_f(x_i)$ et $W_f(x_i)$.

$$D_f(x_i) = \frac{\sum W_j(x_i) * D_j(x_i)}{\sum W_j(x_i)} \quad (5)$$

$$W_f(x_i) = \sum W_j(x_i) \quad (6)$$

Où : $(x_i)$ et $W_j(x_i)$ sont les valeurs calculées lorsque le point dans plusieurs nuages de points se trouvent à plusieurs reprises dans le même $g_i$ pour la $j^e$ fois ; puis, en utilisant une méthode de cube en marche, obtenir les nuages de points et les résultats de grille.

**11.** Méthode de mesure tridimensionnelle avec multimodes de mesure selon la revendication 8, **caractérisée en ce que** : dans le mode de mesure de multilignes parallèles, les données obtenues dans le processus de mesure ne sont affichées que d'une manière d'échantillonnage, au lieu d'être calculées et mises à jour en temps réel, pour guider des utilisateurs à mesurer ;

Après avoir terminé la mesure, intégrer tous les nuages de points obtenus par mesure dans un système de coordonnées global uniforme, et puis, calculer les vecteurs normaux de tous les nuages de points ainsi que la valeur de distance $D(x_i)$ et son poids de confiance $W(x_i)$.

**12.** Méthode de mesure tridimensionnelle avec multimodes de mesure selon la revendication 11, **caractérisée en ce que**, lors du calcul des vecteurs normaux de tous les nuages de points, le vecteur normal de chaque point est analysé et calculé en utilisant un composant principal et la formule suivante :

$$C(p) = \frac{\sum q_i}{N}(7)$$

$$M(p) = \sum (q_i - C(p)) \cdot (q_i - C(p))^T \quad (8)$$

Où : p indique le point dont le vecteur normal est à calculer ; $q_i$ indique un point dans un voisinage spécifique de p; $M(p)$ est une matrice de covariance, et le vecteur caractéristique correspondant à sa valeur caractéristique minimale est le vecteur normal de p ; d'ailleurs, la direction du vecteur normal face à une caméra est prise pour la direction du vecteur normal.

**13.** Méthode de mesure tridimensionnelle avec multimodes de mesure selon la revendication 5, **caractérisée en ce que** : dans l'étape S3, l'association des données obtenues dans plusieurs modes de mesure est divisée en deux types principaux : l'association approximative et l'association précise. Ladite association approximative est réalisée en utilisant la méthode d'association de sélection manuelle, celle d'association de points de repère et celle d'association caractéristique ; alors que, la méthode itérative du point le plus proche est adoptée pour ladite association précise.

**14.** Méthode de mesure tridimensionnelle avec multimodes de mesure selon l'une quelconque des revendications 5 à 13, **caractérisée en ce que** l'étape S4 comprend spécifiquement :

S41. Entre deux trames des données mesurées, rechercher les points correspondants du nuage de points et un point de repère ;

S42. Utiliser une formule de minimisation d'erreur, pour obtenir une matrice de variation rigide de chaque trame de nuage de points ; et

S43. Multiplier la matrice de variation rigide par chaque trame de nuage de points, et itérer ledit processus jusqu'à la convergence.

**15.** Méthode de mesure tridimensionnelle avec multimodes de mesure selon la revendication 14, **caractérisée en ce que**, dans l'étape S43, la formule d'erreur utilisée est la suivante :

$$\text{Erreur (RT)} =$$

$$\sum_{\text{deux nuages de points quelconques}(i,j)} \left( w_{i,j}^1 \sum_k \left\| n_k^T (RT_i * p_k - RT_j * q_k) \right\|^2 + w_{i,j}^2 \sum_k \left\| RT_i * P_k - RT_j * Q_k \right\|^2 \right) (9)$$

Où : $(p_k, q_k)$ est un point correspondant de $(i, j)$ ; $(P_k, Q_k)$ est un point de repère correspondant de $(i, j)$ ; $n_k$ est un vecteur normal de $q_k$ ; $RT_i$ est une matrice de variation rigide du $i^e$ nuage de points ; RT une matrice de variation rigide de tous les nuages de points ; d'ailleurs, $w_{i,j}^1$ est le poids du point correspondant du nuage de points, et $w_{i,j}^2$ le poids du point correspondant au point de repère. Lorsqu'il y a une trame de données mesurées sur multilignes parallèles dans i, j, définir $w_{i,j}^1 = 0$.

Fig. 1

Fig. 2

Fig. 3

Fig. 4

Fig. 5

| | | -0.8 | -0.3 | 0 | 0.5 | 1.0 | | | |
|---|---|---|---|---|---|---|---|---|---|
| | | | -0.6 | -0. | 0.4 | 0.9 | | | |
| | | | -0.8 | -0.3 | 0.2 | 0.7 | | | |
| | | | -1.0 | -0.5 | 0 | 0.5 | 1.0 | | |
| | | | | -0.6 | -0.1 | 0.4 | 0.9 | | |
| | | | | -0.6 | -0. | 0.4 | 0.9 | | |
| | | | | -0.7 | -0.2 | 0.3 | 0.7 | | |
| | | | | -0.7 | -0.2 | 0.3 | 0.7 | | |
| | | | | -0.8 | -0.3 | 0.3 | 0.7 | | |
| | | | | -0.8 | -0.3 | 0.3 | 0.7 | | |

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1483999 A
- CN 101189487 B
- CN 102112845 B
- US 20140015963 A1